# EUROPÄISCHE PATENTSCHRIFT

(11) **EP 3 108 333 B1**
(45) Veröffentlichungstag und Bekanntmachung des Hinweises auf die Patenterteilung: **27.05.2020**
(21) Anmeldenummer: 15705546.8
(22) Anmeldetag: 06.02.2015
(51) Int. Cl.: G06F 3/01

(54) **ANWENDERSCHNITTSTELLE UND VERFAHREN ZUR UNTERSTÜTZUNG EINES ANWENDERS BEI DER BEDIENUNG EINER ANWENDERSCHNITTSTELLE**
USER INTERFACE AND METHOD FOR ASSISTING A USER IN THE OPERATION OF A USER INTERFACE
INTERFACE UTILISATEUR ET PROCÉDÉ D'ASSISTANCE D'UN UTILISATEUR LORS DE LA COMMANDE D'UNE INTERFACE UTILISATEUR

(30) Priorität: 17.02.2014 DE 102014202836
(43) Veröffentlichungstag der Anmeldung: 28.12.2016
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38444 Wolfsburg (DE)
(86) Internationale Anmeldenummer: PCT/EP2015/052551
(87) Internationale Veröffentlichungsnummer: WO 2015/121175

(56) Entgegenhaltungen:
- DE-A1-102010 031 878
- US-A1- 2009 254 855
- US-A1- 2010 315 413
- US-A1- 2012 274 547

## Beschreibung

### Stand der Technik

Die vorliegende Erfindung betrifft eine Anwenderschnittstelle sowie ein Verfahren zur Unterstützung eines Anwenders bei der Bedienung einer Anwenderschnittstelle. Insbesondere betrifft die vorliegende Erfindung ein verbessertes Feedback an einen Anwender für frei im Raum ausgeführte Gesten ("3D-Gesten").

Die Gestenbedienung im freien Raum erfreut sich immer größerer Beliebtheit. Mittels solcher Gesten können Anwender mit Mensch-Maschinen-Schnittstellen kommunizieren, ohne körperlichen Kontakt mit der Eingabeeinrichtung zu haben. Beispielsweise über optische und/oder infrarotbasierte Systeme wird die Geste erkannt und in Steuerbefehle umgewandelt. Während sich für die Bedienung berührungsempfindlicher Oberflächen von Anwenderschnittstellen rasch intuitiv verständliche Bedienmuster gefunden und durchgesetzt haben, fehlt es den meisten Anwendern für die Bedienung von 3D-Schnittstellen derzeit an entsprechender Erfahrung. Eine statische Darstellung von Bildern oder die Darstellung von Videos in einer für das System vorgesehenen Bedienungsanleitung können die Anwenderakzeptanz nur sehr bedingt verbessern. Bei der 3D-Gestenbedienung, welche nicht ausschließlich auf die Bewegung bzw. die Position einer Hand, sondern zudem auf die Stellung ("Orientierung") der Hand und der Finger reagiert, sind die für die Anwenderschnittstelle zu interpretierenden Signale nicht immer ersichtlich.

DE 10 2012 000 263 A1 offenbart ein Verfahren und eine Vorrichtung zum Bedienen von Funktionen in einem Fahrzeug unter Verwendung von im dreidimensionalem Raum ausgeführten Gesten. Wird durch eine im Dachbereich des Fahrzeugs angeordnete Erfassungseinrichtung eine Hand oder ein Finger des Nutzers für eine erste vorbestimmte Zeitdauer in einem gültigen Erfassungsbereich detektiert, wird eine Gestensteuerung aktiviert. Für den Lernprozess des Nutzers wird vorgeschlagen, durch optische und/oder akustische Rückmeldungen während einer Gestenbedienung eine Blindbedienung durch den Nutzer zu ermöglichen.

DE 10 2006 037 156 A1 beschreibt eine interaktive Bedienvorrichtung, durch welche die Gestenbedienung eines auf einer Anzeigevorrichtung dargestellten grafischen Inhaltes ermöglicht wird. In Abhängigkeit einer ermittelten Bedienabsicht wird der auf der Anzeigevorrichtung dargestellte grafische Inhalt für das Aktivieren einer mit ihm assoziierten Funktion optimiert dargestellt. Beispielsweise wird bei der Annäherung an eine Schaltfläche die Schaltfläche vergrößert dargestellt.

DE 10 2009 008 041 A1 offenbart ein Verfahren zur Bedienung eines Kraftfahrzeugs mit einem Touchscreen, bei welchem eine Annäherungssensorik zur Erkennung einer Geste für die Ausführung bzw. Initialisierung der Ausführung einer Funktion des Kraftfahrzeugs vorgesehen ist. Wird in der Umgebung des Touchscreens eine Geste einer Hand ohne Berührung des Touchscreens ausgeführt, wird die Funktion des Kraftfahrzeugs ausgeführt.

US 2010/0315413 A1 offenbart eine Anwenderschnittstelle zur Interaktion über dreidimensionale, berührungslose Gesten, bei welcher eine Repräsentation einer Hand auf einem Bildschirm den übrigen Inhalt der GUI überlagert. In Abhängigkeit eines Abstandes jeweiliger Bereiche der Hand von einem Sensor wird die Darstellung der Repräsentation angepasst.

US 2012/0274547 A1 offenbart Techniken zur Navigation durch grafische Anwenderoberflächen mittels dreidimensionaler, berührungsloser Gesten. Eine optische Repräsentation einer Hand eines Anwenders wird den sonstigen Inhalt der GUI überlagernd angezeigt. Bereiche der Hand des Anwenders, welche einen geringen Abstand zur Oberfläche/zum Sensor aufweisen, werden dunkler/weniger transparent etc. dargestellt als Bereiche der Hand, welche einen größeren Abstand vom Display/vom Sensor aufweisen.

Für das Erlernen von 3D-Gesten durch einen Anwender bietet der Stand der Technik keine Lösungen an, welche die technischen Möglichkeiten in zufriedenstellendem Maße ausschöpfen. Es ist daher eine Aufgabe der vorliegenden Erfindung, den vorstehend identifizierten Bedarf zu stillen.

### Offenbarung der Erfindung

Die vorstehend genannte Aufgabe wird erfindungsgemäß durch ein Verfahren mit den Merkmalen gemäß Anspruch 1 sowie eine Anwenderschnittstelle mit den Merkmalen gemäß Anspruch 7 gelöst. Durch das Verfahren wird ein Anwender bei der Bedienung einer Anwenderschnittstelle in einem 3D-Gesten-Modus unterstützt. Im Rahmen der vorliegenden Erfindung sei unter einem "3D-Gesten-Modus" ein solcher Betriebszustand der Anwenderschnittstelle verstanden, in welchem die Anwenderschnittstelle durch frei im Raum ausgeführte Gesten durch den Anwender gesteuert werden kann. Ausgeschlossen sei hierbei insbesondere die Bedienung von Bedienelementen und berührungsempfindlichen Oberflächen unter Körperkontakt, welche jedoch selbstverständlich zusätzlich als Steuerbefehle verwendet werden können. In einem ersten Schritt wird ein grafischer Inhalt auf einer Anzeigeeinheit der Anwenderschnittstelle dargestellt. Die Anwenderschnittstelle kann beispielsweise ein fest in einem Fahrzeug integrierter Bildschirm (nach Art eines zentralen Informationsdisplays oder eines Kombiinstrumentes) sein, auf welchem ein Menüpunkt als grafischer Inhalt angezeigt wird. In einem zweiten Schritt wird eine Hand eines Anwenders mittels eines Sensors erfasst. Der Anwender kann beispielsweise ein Fahrer oder Beifahrer eines Fortbewegungsmittels oder ein Bediener eines mobilen Drahtloskommunikationsgerätes sein. Der Sensor kann beispielsweise als optischer Sensor und/oder als Infrarot-LED-Leiste ausgestaltet sein. Lediglich seine Eignung zur Erfassung und elektrischen Wandlung von 3D-Gesten ist erfindungsgemäß essentiell. In einem dritten Schritt wird dem grafischen Inhalt eine Repräsentation der Hand des Anwenders überlagert. Mit anderen Worten wird zusätzlich zum grafischen Inhalt eine optische Darstellung repräsentierend die Hand bzw. die Sensorsignale bezüglich der Hand angezeigt. Auf diese Weise erhält der Anwender eine unverzügliche Rückmeldung darüber, in welcher Weise seine Hand von der Anwenderschnittstelle erkannt wird. Dies erhöht das Anwenderverständnis und unterstützt den Anwender somit beim Erlernen mit Funktionen assoziierter Gesten.

Die Unteransprüche zeigen bevorzugte Weiterbildungen der Erfindung.

Die Repräsentation der Hand kann beispielsweise zumindest teilweise transparent ausgestaltet sein. Auf diese Weise ist einerseits der grafische Inhalt nicht vollständig unkenntlich, andererseits wird verdeutlicht, dass die Repräsentation der Hand nicht dem grafischen Inhalt der Benutzeroberfläche selbst zugehört.

Zur Kenntlichmachung der dreidimensionalen Natur der Hand kann die Repräsentation eine Transparenz aufweisen, welche in Abhängigkeit eines abschnittsweisen Abstandes der Hand des Anwenders vom Sensor variiert. Mit anderen Worten werden solche Abschnitte der Hand stärker transparent repräsentiert, welche dem verwendeten Sensor weiter entfernt sind. Dieses Prinzip kann auf die gesamte Repräsentation einer mittels der Hand ausgeführten Geste übertragen werden, wobei die Transparenz erhöht bzw. die Intensität entsprechender Abschnitte verringert wird, wenn der Abstand der Hand bezüglich des Sensors zunimmt. Umgekehrt kann eine erhöhte Intensität bzw. eine verringerte Transparenz einem dem Sensor nähere Position der Hand repräsentieren. Auf diese Weise wird dem Anwender einfach und intuitiv ein solcher Bereich kenntlich gemacht, in welchem die Gestenerkennung besonders gut funktioniert. Wird der Abstand zum Sensor zu gering, kann die Repräsentation beispielsweise durch unscharfe Umrandungen oder eine unvollständige Erfassung der Hand den Anwender darüber informieren, dass ein größerer Abstand vom Sensor gewählt werden sollte, um die Gestenerkennung zu verbessern und die Rechenleistung zur Erkennung vordefinierter Gesten zu verringern.

Weiter kann das erfindungsgemäße Verfahren ein Empfangen eines ersten vordefinierten Signals zum Darstellen der Repräsentation der Hand umfassen, mittels welchem ein Anwenderwunsch nach erfindungsgemäßer Unterstützung kommuniziert wird. Im Ansprechen darauf kann das Darstellen der Repräsentation der Hand beginnen, während der grafische Inhalt hinter der Repräsentation der Hand fortwährend angezeigt wird. Das erste vordefinierte Signal kann beispielsweise durch eine Bedieneinheit der Anwenderschnittstelle und/oder durch Ausführen einer vordefinierten Geste im Erfassungsbereich für 3D-Gesten erzeugt werden. Hat der Anwender keinen fortbestehenden Bedarf an erfindungsgemäßer Unterstützung, kann er durch das erste vordefinierte Signal und/oder ein zweites vordefiniertes Signal die Darstellung der Repräsentation der Hand beenden, während der grafische Inhalt fortwährend angezeigt wird. Alternativ oder zusätzlich kann die erfindungsgemäße Repräsentation der Hand im Ansprechen auf eine einfache oder mehrfache Fehlerkennung eingeschaltet und im Ansprechen auf eine vordefinierte Anzahl erfolgreich erkannter 3D-Gesten automatisch ausgeschaltet werden. Auf diese Weise wird der Anwender auf Verbesserungsbedarf bei der Handführung aufmerksam gemacht bzw. nicht durch die erfindungsgemäße Repräsentation vom grafischen Inhalt abgelenkt.

Im Ansprechen auf das Empfangen eines zweiten vordefinierten Signals kann eine optische Erscheinung der Repräsentation der Hand geändert werden. Dies kann den Wechsel einer Farbe, die Veränderung einer Intensität bzw. eines Transparenzgrades und/oder die Auswahl einer anderen Textur für die Repräsentation erfolgen. Einerseits kann die Repräsentation auf diese Weise an die Vorlieben eines Anwenders angepasst werden. Andererseits können zusätzliche Randbedingungen (z.B. ein Signal eines Lichtsensors) zum Anlass für einen Wechsel in einen Nachtmodus der Darstellung berücksichtigt werden. Mitunter kann es auch sinnvoll sein, die optische Erscheinung der Repräsentation in Abhängigkeit einer farblichen Gestaltung des grafischen Inhaltes anzupassen, um den Kontrast zu erhöhen bzw. beizubehalten.

Sowohl das erste auch das zweite Signal kann im Ansprechen auf unterschiedliche Anwenderinteraktionen erzeugt werden. Diese können ein Betätigen eines mechanischen Schalters und/oder ein Betätigen einer softwaretechnisch realisierten Schaltfläche auf einer Anzeigeeinheit und/oder ein Erkennen eines Stimmkommandos und/oder eine Annäherung an einen 3D-Gesten-Sensor umfassen. Auch Sensorsignale und Informationen, welche beispielsweise durch die Peripherie der Anwenderschnittstelle erzeugt werden (z.B. ein Bussystem eines Fortbewegungsmittels), kann für die Erzeugung des ersten bzw. des zweiten vordefinierten Signals herangezogen werden.

Gemäß einem zweiten Aspekt der vorliegenden Erfindung wird eine Anwenderschnittstelle vorgeschlagen, welche einen Sensor zur Erfassung von 3D-Gesten umfasst. Weiter ist eine Anzeigeeinheit zur Darstellung eines grafischen Inhaltes vorgesehen, welche beispielsweise als Bildschirm in einem Armaturenbrett eines Fortbewegungsmittels oder als Anzeige eines Anwenderendgerätes ausgestaltet sein kann. Zusätzlich ist eine Auswerteeinheit vorgesehen, welche die vom Sensor erfassten Signale verarbeiten kann. Beispielsweise ist die Auswerteeinheit eingerichtet, 3D-Gesten in den Signalen zu identifizieren und mit in einem Speichermittel abgespeicherten Referenzen zu vergleichen, um im Ansprechen auf vordefinierte Gesten vordefinierte Funktionen aufzurufen. Erfindungsgemäß ist die Auswerteeinheit auch eingerichtet, aus den Sensorsignalen eine Repräsentation der Hand des Anwenders zu erzeugen, welche durch die Anzeigeeinheit dem grafischen Inhalt überlagert wird. Die Merkmale, Merkmalskombinationen und die sich aus diesen ergebenden Vorteile entsprechen den in Verbindung mit dem erfindungsgemäßen Verfahren ausgeführten derart ersichtlich, dass zur Vermeidung von Wiederholungen auf die obigen Ausführungen verwiesen wird.

Sowohl für das erfindungsgemäße Verfahren als auch für die erfindungsgemäße Anwenderschnittstelle gilt, dass die Repräsentation der Hand die Hand optisch nachbildet. Je besser die Repräsentation die Hand nachbildet, desto besser versteht der Anwender aus der Repräsentation, wie das System die Hand erkennt (oder: "auflöst"). Daher kann die Repräsentation insbesondere auch die Haltung der Hand und/oder ihre Bewegung und/oder einzelne Finger und/oder die Handfläche und/oder Details der Handoberfläche wiedergeben.

Gemäß einem dritten Aspekt der vorliegenden Erfindung wird ein Anwenderendgerät vorgeschlagen, welches insbesondere als elektronisches Drahtloskommunikationsgerät nach Art eines Tablet-PCs, eines Smartphones o.Ä. ausgestaltet sein kann. Für eine ergonomische und intuitive Anwenderunterstützung umfasst das erfindungsgemäße Anwenderendgerät eine erfindungsgemäß ausgestaltete Anwenderschnittstelle, mittels welchem ein Anwender bei der 3D-Gestenbedienung des Anwenderendgerätes entsprechend dem erfindungsgemäßen Verfahren unterstütz wird.

Gemäß einem vierten Aspekt der vorliegenden Erfindung wird ein Fortbewegungsmittel mit einer erfindungsgemäßen Anwenderschnittstelle vorgeschlagen, welches beispielsweise als Pkw, Transporter, Lkw, Wasser- und/oder Luftfahrzeug ausgestaltet ist. Die Anzeigeeinheit kann beispielsweise als zentrales Informationsdisplay und/oder als Kombiinstrument im Armaturenbrett des Fortbewegungsmittels vorgesehen sein. Die erfindungsgemäße Unterstützung des Anwenders (im Beispiel des Fahrers bzw. des Beifahrers) ermöglicht ein rasches Erlernen einer präzisen Gestik zur Ausführung mit Funktionen assoziierter Gesten, wodurch der Anwender seine Aufmerksamkeit hauptsächlich der Führung des Fortbewegungsmittels widmen kann. Auf diese Weise wird die Sicherheit bei der Bedienung der Anwenderschnittstelle sowie des Fortbewegungsmittels erhöht.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Komponenten eines Ausführungsbeispiels einer erfindungsgemäßen Anwenderschnittstelle in einem Ausführungsbeispiel eines erfindungsgemäßen Fortbewegungsmittels;
- Figur 2: eine schematische Übersicht über Komponenten eines Ausführungsbeispiels einer erfindungsgemäßen Anwenderschnittstelle in einem Ausführungsbeispiel eines erfindungsgemäßen Anwenderendgerätes;
- Figur 3: eine Ansicht eines Ausführungsbeispiels eines Bedienschrittes eines Ausführungsbeispiels einer erfindungsgemäßen Anwenderschnittstelle;
- Figur 4: unterschiedliche Stellungen bzw. Gesten einer Hand eines Anwenders, deren Repräsentation erfindungsgemäß erzeugt werden kann;
- Figur 5: ein erstes Ausführungsbeispiel eines erfindungsgemäßen Bedienszenarios einer erfindungsgemäßen Anwenderschnittstelle;
- Figur 6: ein zweites Ausführungsbeispiel eines erfindungsgemäßen Bedienszenarios einer erfindungsgemäßen Anwenderschnittstelle;
- Figur 7: ein drittes Ausführungsbeispiel eines erfindungsgemäßen Bedienszenarios einer erfindungsgemäßen Anwenderschnittstelle;
- Figur 8: ein viertes Ausführungsbeispiel eines erfindungsgemäßen Bedienszenarios einer erfindungsgemäßen Anwenderschnittstelle;
- Figur 9: ein fünftes Ausführungsbeispiel eines erfindungsgemäßen Bedienszenarios einer erfindungsgemäßen Anwenderschnittstelle; und
- Figur 10: ein Flussdiagramm veranschaulichend Schritte eines Ausführungsbeispiels eines erfindungsgemäßen Verfahrens.

### Ausführungsformen der Erfindung

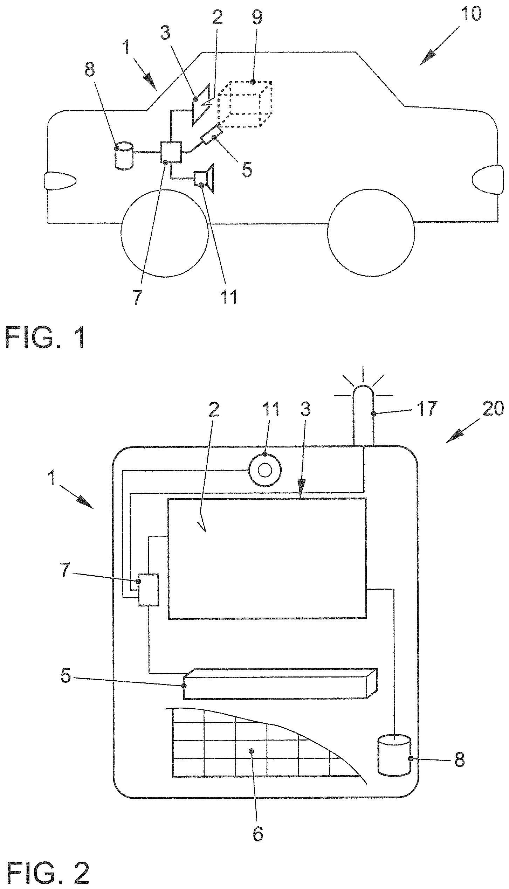

Figur 1 zeigt einen Pkw 10 als Fortbewegungsmittel, in welchem ein Bildschirm 3 als Anzeigeeinheit einer erfindungsgemäßen Anwenderschnittstelle in das Armaturenbrett eingelassen ist. Unterhalb des Bildschirms 3 ist ein Sensor 5 angeordnet, welcher einen Erfassungsbereich 9 vor dem Bildschirm 3 im Raum aufspannt. Ein Lautsprecher 11 ist zur Ausgabe von Hinweisen an den Anwender der Anwenderschnittstelle 1 vorgesehen. Schließlich ist auch ein Datenspeicher 8 zum Bereitstellen vordefinierter Referenzen für die Gestenerkennung im Pkw 10 enthalten. Die vorgenannten Komponenten sind an eine Auswerteeinheit in Form eines elektronischen Steuergerätes 7 informationstechnisch angebunden. Das elektronische Steuergerät 7 ist zudem für die Darstellung eines grafischen Inhaltes 2 in Form eines Menüs auf dem Bildschirm 3 eingerichtet.

Figur 2 zeigt eine Übersicht über Komponenten eines Ausführungsbeispiels einer erfindungsgemäßen Anwenderschnittstelle in einem Ausführungsbeispiel eines erfindungsgemäßen Anwenderendgerätes 20 in Form eines Smartphones. Der Bildschirm 3 des Smartphones stellt die Anzeigeeinheit, ein Mikroprozessor 7 die Auswerteeinheit, ein Flash-Speicher 8, das Speichermittel und ein Lautsprecher 11 einen Signalgeber der erfindungsgemäßen Anwenderschnittstelle 1 dar. Zusätzlich ist eine Infrarot-LED-Leiste 5 als Sensor mit dem Mikroprozessor 7 informationstechnisch verbunden. Letzterer ist auch mit einer Antenne 17 gekoppelt, um drahtlos mit einer Drahtlosinfrastruktur bzw. anderen Anwenderendgeräten zu kommunizieren. Eine Tastatur 6 des Smartphones 20 ist teilweise freigeschnitten, um den Blick auf die hinter ihr liegenden Komponenten zu ermöglichen.

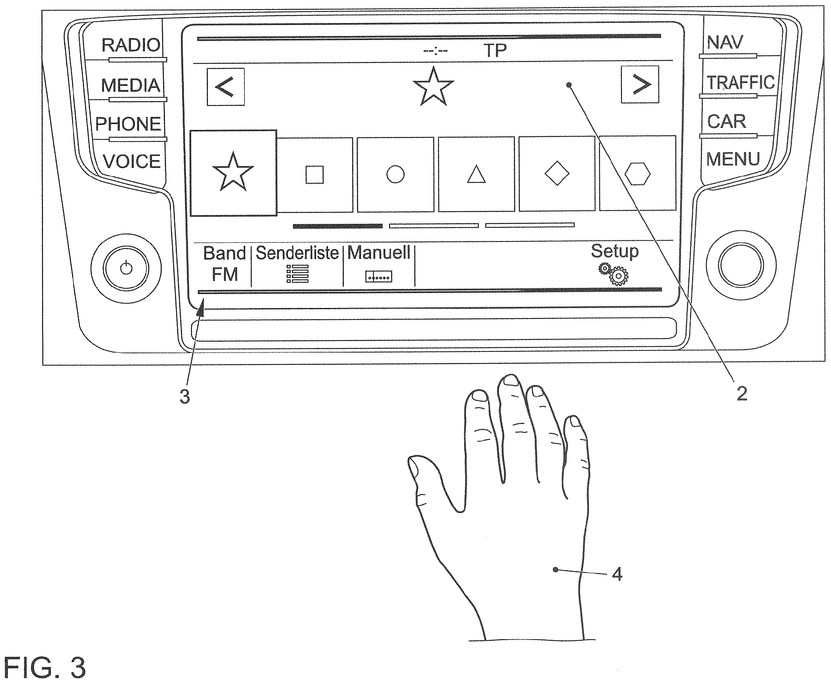

Figur 3 zeigt ein Ausführungsbeispiel eines Bildschirms 3, auf welchem ein Menü 2 zur Auswahl eines Radiosenders dargestellt wird. Vor dem Bildschirm 3 befindet sich im Erfassungsbereich 9 des Sensors 5 (beide nicht dargestellt) eine Hand 4 eines Anwenders, mittels welcher der Anwender eine 3D-Geste zur Auswahl des Radiosenders ausführen möchte.

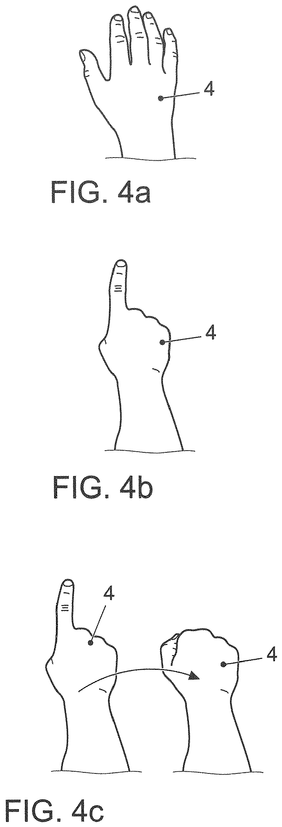

Figur 4 zeigt mögliche Handhaltungen und Gesten für die Interaktion mit einer erfindungsgemäßen Anwenderschnittstelle 1. In Teilfigur a weist die geöffnete Handfläche der Hand 4 in Richtung des Bildschirms 3. Die Finger der Hand 4 sind gestreckt und leicht gespreizt. In Teilfigur b ist eine Zeige-Geste der Hand 4 dargestellt, bei welcher lediglich der Zeigefinger der Hand 4 gestreckt ist, während die übrigen Finger zu einer Faust geballt sind. In Teilfigur c wird eine Tippgeste bzw. Klick-Geste veranschaulicht, in welcher der Zeigefinger der Hand 4 zunächst ausgestreckt ist und anschließend in Richtung des Bildschirms 3 abgeklappt wird.

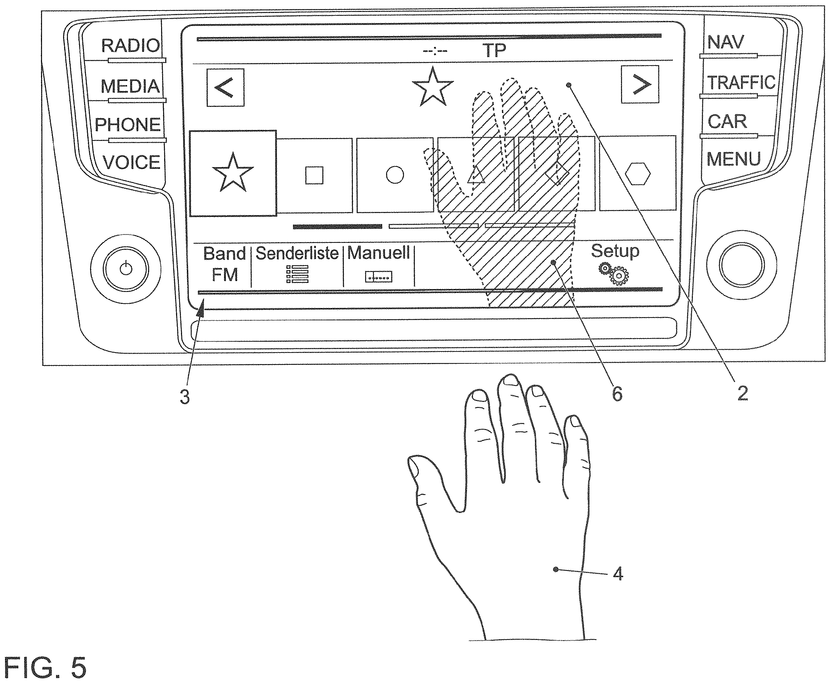

Figur 5 zeigt die in Verbindung mit Figur 3 dargestellte Bedienung der Anwenderschnittstelle, nachdem die erfindungsgemäße Unterstützung durch die Anzeige einer Repräsentation 6 der Hand 4 gestartet wurde. Die Repräsentation 6 ist als teiltransparente, blau gefärbte Hand dem grafischen Inhalt 2 überlagert. Die Form der Repräsentation 6 entspricht im Wesentlichen einer Projektion der Hand 4 in Richtung der Anzeigeoberfläche des Bildschirms 3. Die Länge der Finger bzw. des Daumens sind im Wesentlichen proportional zu denen der Hand 4, so dass auch eine Ausrichtung der Hand 4 und eine aktuelle Stellung ihrer Finger naturgetreu repräsentiert wird. Bei einer Bewegung der Hand 4 wird die Repräsentation 6 stets bestmöglich nachgeführt/angepasst.

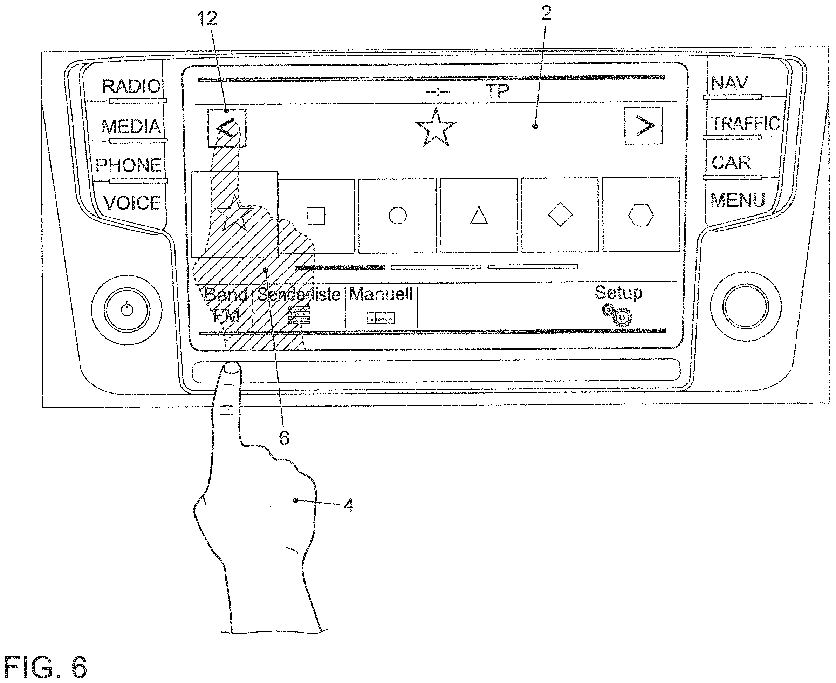

Figur 6 zeigt einen Bedienschritt, in welchem der Anwender die Hand 4 zum Ausführen einer Tipp-Geste vorbereitet hat. Die Spitze des Zeigefingers der Repräsentation 6 ist über eine Schaltfläche für die Anwahl des zuletzt gehörten Radiosenders gebracht worden. Im Ansprechen darauf wird die Schaltfläche durch einen roten Rahmen 12 optisch hervorgehoben. Dieser informiert den Anwender darüber, dass der Eingabefokus seiner Hand 4 dieser Schaltfläche zugeordnet wurde. Für die Bedienung herkömmlicher Benutzeroberflächen (mittels einer Maus) hat sich für einen solchen Vorgang auch der Begriff "(Mouse)-over-Event" durchgesetzt. Der rote Rahmen 12 sei daher lediglich stellvertretend für sämtliche bekannte Möglichkeiten zur optischen Modifikation der besagten Schaltfläche verstanden.

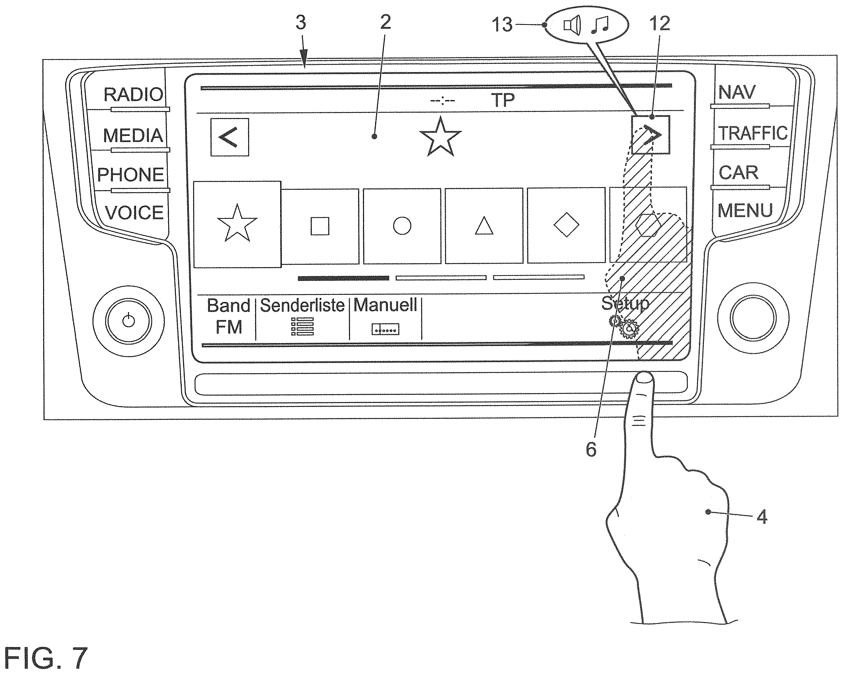

Figur 7 zeigt eine mit Figur 6 verwandte Darstellung, in welcher der Anwender die Spitze des Zeigefingers der Repräsentation 6 über eine Schaltfläche zur Anwahl eines nächsten Radiosenders gebracht hat. Im Ansprechen hierauf hebt auch hier ein roter Rahmen 12 diese Schaltfläche stellvertretend her. Zusätzlich wird durch ein Lautsprechersymbol und eine Note 13 veranschaulicht, dass dieser Vorgang durch die Ausgabe einer Sprachausgabe, eines Klangzeichens und eines Geräusches begleitet werden kann, wenn dies in den Einstellungen für die 3D-Gestenbedienung entsprechend definiert ist.

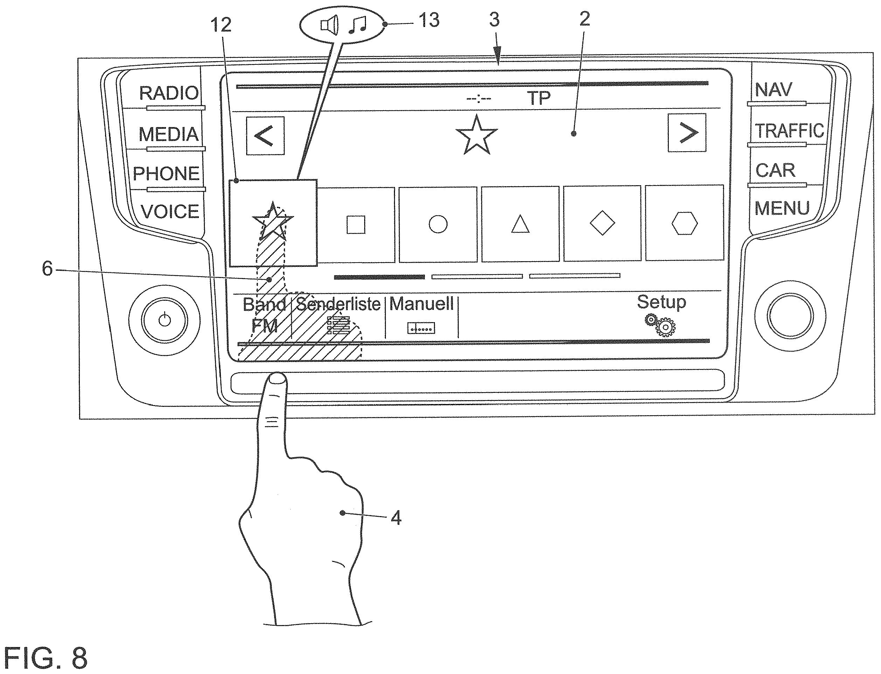

Figur 8 zeigt eine mit der Figur 7 verwandte Darstellung, bei welcher jedoch eine einem Radiosender zugeordnete Schaltfläche durch die Hand 4 angewählt worden ist. Im Ansprechen darauf erhält die Schaltfläche des betreffenden Senders den roten Rahmen 12 und veranlasst die Ausgabe eines Klangzeichens entsprechend dem Notensymbol 13.

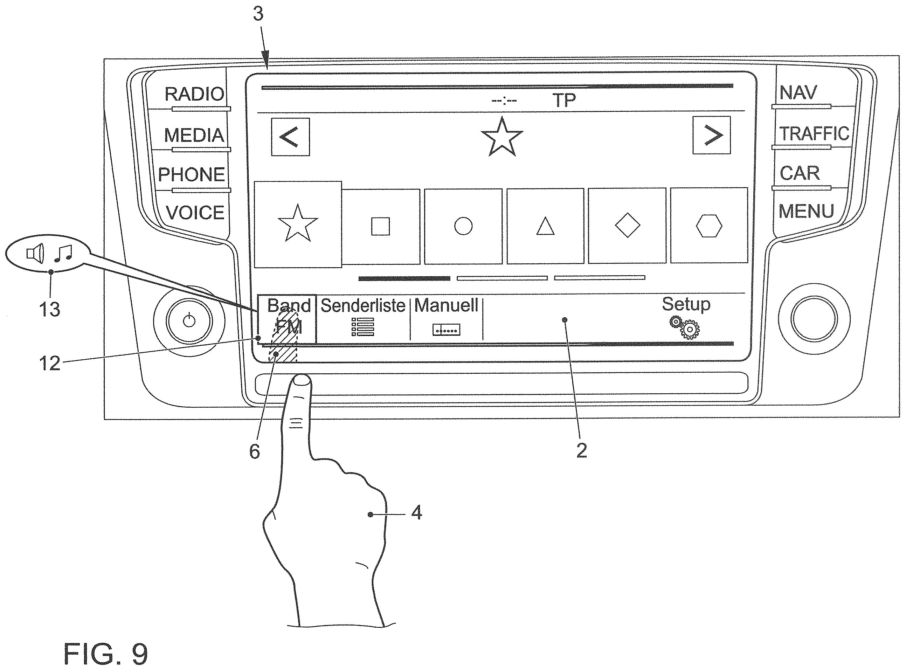

Figur 9 zeigt die erfindungsgemäße Bedienung bzw. Bedienunterstützung in Verbindung mit Schaltflächen einer höheren Hierarchie. Hierbei erhält eine Schaltfläche zur Wahl eines Frequenzbandes für den Radioempfang den roten Rahmen 12, indem der Anwender die Spitze des Zeigefingers der Repräsentation 6 über die besagte Schaltfläche gebracht hat.

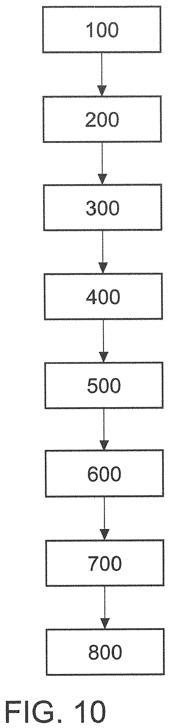

Figur 10 zeigt ein Flussdiagramm für ein Ausführungsbeispiel eines erfindungsgemäßen Verfahrens. Hierbei wird in Schritt 100 ein grafischer Inhalt auf einer Anzeigeeinheit einer erfindungsgemäßen Anwenderschnittstelle angezeigt. Der grafische Inhalt kann beispielsweise ein Menü zur Wahl eines Radiosenders (siehe Figur 9) sein. Anschließend wird in Schritt 200 die Hand eines Anwenders sensorisch erfasst und in Schritt 300 ein erstes vordefiniertes Signal repräsentierend den Wunsch eines Anwenders nach Unterstützung bei der Bedienung empfangen. Im Ansprechen darauf wird in Schritt 400 damit begonnen, während der weiteren Bedienung in Schritt 500 eine Repräsentation der Hand des Anwenders darzustellen. Die Darstellung der Repräsentation erfolgt während des fortgesetzten Anzeigens des grafischen Inhaltes im Hintergrund. In Schritt 600 wird ein zweites vordefiniertes Signal empfangen, im Ansprechen worauf in Schritt 700 eine optische Erscheinung der Repräsentation der Hand des Anwenders modifiziert wird. Beispielsweise wird ein Signal eines Lichtsensors empfangen, im Ansprechen worauf die Darstellung einem Nachtmodus angepasst wird. In Schritt 800 wird im Ansprechen auf ein weiteres erstes vordefiniertes Signal das Darstellen der Repräsentation der Hand beendet, während die Darstellung des grafischen Inhaltes fortgesetzt wird.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: grafischer Inhalt
- 3: Bildschirm
- 4: Hand
- 5: Sensor
- 6: Repräsentation der Hand
- 7: elektronisches Steuergerät
- 8: Datenspeicher
- 9: Erfassungsbereich
- 10: Pkw
- 11: Lautsprecher
- 12: roter Rahmen
- 13: Lautsprecher/-Notensymbol
- 100-800: Verfahrensschritte

## Patentansprüche

1. Verfahren zur Unterstützung eines Anwenders bei der Bedienung einer Anwenderschnittstelle (1) in einem 3D-Gesten-Modus, in welchem eine Bedienung der Anwenderschnittstelle (1) durch frei im Raum ausgeführte Gesten, nachfolgend 3D-Gesten genannt, erfolgen kann, umfassend
- Anzeigen (100) eines grafischen Inhaltes (2) auf einer Anzeigeeinheit (3) der Anwenderschnittstelle (1),
- Erfassen (200) einer Hand (4) des Anwenders mittels eines Sensors (5),
- Darstellen (500) einer Repräsentation (6) der Hand (4) als Überlagerung des grafischen Inhaltes (2),
- Empfangen (600) eines zweiten vordefinierten Signals und im Ansprechen darauf
- Ändern (700) einer optischen Erscheinung der Repräsentation (6) der Hand (4), wobei das vordefinierte zweite Signal im Ansprechen auf
- eine Betätigung eines mechanischen Schalters, und/oder
- eine Betätigung einer softwaretechnisch realisierten Schaltfläche, und/oder
- eine Erkennung eines Stimmkommandos erzeugt wird.

2. Verfahren nach Anspruch 1, wobei die Repräsentation (6) der Hand (4) zumindest teilweise transparent ausgestaltet ist.

3. Verfahren nach Anspruch 1 oder 2, wobei die Transparenz der Repräsentation (6) in Abhängigkeit eines abschnittsweisen Abstandes der Hand (4) des Anwenders vom Sensor (5) variiert.

4. Verfahren nach einem der vorstehenden Ansprüche weiter umfassend
- Empfangen (300) eines ersten vordefinierten Signals und im Ansprechen darauf
- Beginnen (400) des Darstellens (500) der Repräsentation (6) der Hand (4), während das Anzeigen des grafischen Inhaltes (2) hinter der Repräsentation fortgesetzt wird, und/oder
- Beenden (800) des Darstellens (500) der Repräsentation (6) der Hand (4), während das Anzeigen des grafischen Inhaltes (2) fortgesetzt wird.

5. Verfahren nach einem der vorstehenden Ansprüche, wobei das Ändern (700) der optischen Erscheinung
- eine Farbe und/oder
- eine Intensität, und/oder
- einen Transparenzgrad, und/oder
- eine Textur der Repräsentation (6) der Hand (4)
betrifft.

6. Verfahren nach einem der vorstehenden Ansprüche, wobei das vordefinierte erste Signal und/oder zweite Signal im Ansprechen auf eine Annäherung an einen Sensor (5) erzeugt wird.

7. Anwenderschnittstelle umfassend
- einen Sensor (5) zur Erfassung (200) frei im Raum durch eine Hand (4) eines Anwenders ausgeführter Gesten, nachfolgend 3D-Gesten genannt,
- eine Anzeigeeinheit (3) zur Darstellung eines graphischen Inhaltes (2), und
- eine Auswerteeinheit (7) zur Wandlung von Signalen des Sensors (5), wo
bei die Auswerteeinheit (7) eingerichtet ist, aus den Sensorsignalen eine Repräsentation (6) der Hand (4) zu erzeugen, und die Anzeigeeinheit (3) eingerichtet ist, die Repräsentation (6) der Hand (4) dem grafischen Inhalt (2) zu überlagern, wobei die Auswerteeinheit (7) weiter eingerichtet ist,
- ein zweites vordefiniertes Signals zu empfangen und im Ansprechen darauf
- eine optischen Erscheinung der Repräsentation (6) der Hand (4) zu ändern, wobei das vordefinierte zweite Signal im Ansprechen auf
- eine Betätigung eines mechanischen Schalters, und/oder
- eine Betätigung einer softwaretechnisch realisierten Schaltfläche, und/oder
- eine Erkennung eines Stimmkommandos erzeugt wird.

8. Anwenderschnittstelle nach Anspruch 7, wobei der Sensor (5) ein optischer Sensor und/oder ein im Infrarotbereich operierender Sensor ist.

9. Anwenderschnittstelle nach Anspruch 7 oder 8, wobei die Repräsentation (6) der Hand (4) die Hand, insbesondere auch ihre Haltung und/oder ihre Bewegung und/oder einzelne Finger und/oder die Handfläche, optisch nachbilden.

10. Anwenderendgerät, insbesondere elektronisches Drahtloskommunikationsgerät, umfassend eine Anwenderschnittstelle (1) nach einem der Ansprüche 7 bis 9.

11. Fortbewegungsmittel umfassend eine Anwenderschnittstelle (1) nach einem der Ansprüche 7 bis 9, wobei die Anzeigeeinheit (3) als fest in ein Armaturenbrett des Fortbewegungsmittels (10) eingebauter zentraler Bildschirm und/oder als Kombiinstrument des Fortbewegungsmittels (10) ausgestaltet ist.

## Claims

1. Method for assisting a user in operating a user interface (1) in a 3-D-gesture mode, in which an operation of the user interface (1) can take place by gestures freely executed in space, hereinafter referred to as 3-D gestures, comprising
- displaying (100) a graphic content (2) on a display unit (3) of the user interface (1),
- detecting (200) a hand (4) of the user by means of a sensor (5),
- presenting (500) a representation (6) of the hand (4) as an overlay of the graphic content (2),
- receiving (600) a second, predefined signal and, in response thereto,
- changing (700) an optical appearance of the representation (6) of the hand (4), wherein the predefined, second signal is generated in response to
- an actuation of a mechanical switch, and/or
- an actuation of a button realized using software, and/or
- a recognition of a voice command.

2. Method according to claim 1, wherein the representation (6) of the hand (4) is designed to be at least partially transparent.

3. Method according to claim 1 or 2, wherein the transparency of the representation (6) varies as a function of a section-by-section distance of the user's hand (4) from the sensor (5).

4. Method according to one of the preceding claims, further comprising
- receiving (300) a first, predefined signal and, in response thereto,
- commencing (400) the presentation (500) of the representation (6) of the hand (4) while the graphic content (2) behind the representation continues to be displayed, and/or
- terminating (800) the presentation (500) of the representation (6) of the hand (4) while the graphic content (2) continues to be displayed.

5. Method according to one of the preceding claims, wherein changing (700) the optical appearance affects
- a color and/or
- an intensity, and/or
- a degree of transparency, and/or
- a texture
of the representation (6) of the hand (4).

6. Method according to one of the preceding claims, wherein the predefined, first signal and/or second signal is generated in response to an approach to a sensor (5).

7. User interface comprising
- a sensor (5) for detecting (200) gestures carried out freely in space by a hand (4) of a user, hereinafter referred to as 3-D gestures,
- a display unit (3) for presenting a graphic content (2), and
- an evaluation unit (7) for converting signals of the sensor (5),
wherein the evaluation unit (7) is configured to generate a representation (6) of the hand (4) from the sensor signals, and the display unit (3) is configured to overlay the representation (6) of the hand (4) on the graphic content (2), wherein the evaluation unit (7) is further configured to
- receive a second, predefined signal and, in response thereto,
- change an optical appearance of the representation (6) of the hand (4), wherein the predefined, second signal is generated in response to
- an actuation of a mechanical switch, and/or
- an actuation of a button realized using software, and/or
- a recognition of a voice command.

8. User interface according to claim 7, wherein the sensor (5) is an optical sensor and/or a sensor operating in the infrared range.

9. User interface according to claim 7 or 8, wherein the representation (6) of the hand (4) optically simulates the hand - in particular, even its position and/or its movement and/or individual fingers and/or the palm.

10. User terminal - in particular, an electronic wireless communications device - comprising a user interface (1) according to one of claims 7 through 9.

11. Means of transport comprising a user interface (1) according to one of claims 7 through 9, wherein the display unit (3) is designed as a central screen permanently installed in a dashboard of the means of transport (10) and/or as an instrument cluster of the means of transport (10).

## Revendications

1. Procédé d'assistance à un utilisateur lors de la commande d'une interface utilisateur (1) dans un mode de gestes 3D, dans lequel une commande de l'interface utilisateur (1) peut être effectuée par des gestes exécutés librement dans l'espace, ci-après appelés gestes 3D, comprenant
- l'affichage (100) d'un contenu graphique (2) sur une unité d'affichage (3) de l'interface utilisateur (1),
- la détection (200) d'une main (4) de l'utilisateur au moyen d'un capteur (5),
- l'affichage (500) d'une représentation (6) de la main (4) comme une superposition au contenu graphique (2),
- la réception (600) d'un deuxième signal prédéfini et en réponse à cela
- la modification (700) d'une apparence optique de la représentation (6) de la main (4), le deuxième signal prédéfini étant généré en réponse à
- un actionnement d'un commutateur mécanique et/ou
- un actionnement d'un bouton réalisé par logiciel et/ou
- une détection d'une commande vocale.

2. Procédé selon la revendication 1, dans lequel la représentation (6) de la main (4) est conçue au moins partiellement transparente.

3. Procédé selon la revendication 1 ou 2, dans lequel la transparence de la représentation (6) varie en fonction d'une distance par tronçons de la main (4) de l'utilisateur du capteur (5).

4. Procédé selon l'une quelconque des revendications précédentes, comprenant en outre
- la réception (300) d'un premier signal prédéfini et en réponse à cela
- le début (400) de l'affichage (500) de la représentation (6) de la main (4), pendant que l'affichage du contenu graphique (2) continue derrière la représentation et/ou
- la fin (800) de l'affichage (500) de la représentation (6) de la main (4), pendant que l'affichage du contenu graphique (2) continue.

5. Procédé selon l'une quelconque des revendications précédentes, dans lequel la modification (700) de l'apparence optique concerne
- une couleur et/ou
- une intensité et/ou
- un degré de transparence et/ou
- une texture
de la représentation (6) de la main (4)

6. Procédé selon l'une quelconque des revendications précédentes, dans lequel le premier signal et/ou deuxième signal prédéfini(s) est/sont généré(s) en réponse à un rapprochement du capteur (5).

7. Interface utilisateur comprenant
- un capteur (5) pour la détection (200) de gestes exécutés librement dans l'espace par une main (4) d'un utilisateur, ci-après appelés gestes 3D,
- une unité d'affichage (3) pour l'affichage d'un contenu graphique (2) et
- une unité d'évaluation (7) pour la conversion de signaux du capteur (5),
l'unité d'évaluation (7) étant configurée pour générer, à partir des signaux du capteur, une représentation (6) de la main (4) et l'unité d'affichage (3) étant configurée pour superposer la représentation (6) de la main (4) au contenu graphique (2), l'unité d'évaluation (7) étant en outre configurée pour
- recevoir un deuxième signal prédéfini et en réponse à cela
- modifier une apparence optique de la représentation (6) de la main (4), le deuxième signal prédéfini étant généré en réponse à
- un actionnement d'un commutateur mécanique et/ou
- un actionnement d'un bouton réalisé par logiciel et/ou
- une détection d'une commande vocale.

8. Interface utilisateur selon la revendication 7, dans laquelle le capteur (5) est un capteur optique et/ou un capteur fonctionnant dans la plage des infrarouges.

9. Interface utilisateur selon la revendication 7 ou 8, dans laquelle la représentation (6) de la main (4) reproduit optiquement la main, en particulier aussi sa position et/ou son mouvement et/ou des doigts individuels et/ou la paume de la main.

10. Appareil utilisateur, en particulier appareil électronique de communication sans fil, comprenant une interface utilisateur (1) selon l'une quelconque des revendications 7 à 9.

11. Moyen de locomotion comprenant une interface utilisateur (1) selon l'une quelconque des revendications 7 à 9, dans lequel l'unité d'affichage (3) est conçue comme un écran central monté de manière fixe dans un tableau de bord du moyen de locomotion (10) et/ou comme un instrument combiné du moyen de locomotion (10).
